# FASCICULE DE BREVET EUROPEEN

(11) **EP 4 210 978 B1**
(45) Date de publication et mention de la délivrance du brevet: **05.11.2025**
(21) Numéro de dépôt: 21773284.1
(22) Date de dépôt: 10.09.2021
(51) Int. Cl.: B60J 1/16

(54) **DISPOSITIF D'OBTURATION D'UNE BAIE MÉNAGÉE DANS LA CARROSSERIE D'UN VÉHICULE ÉQUIPÉ D'UN EMBOUT FORMANT BUTÉE MÉCANIQUE D'UNE NAVETTE COULISSANTE, ET VÉHICULE CORRESPONDANT**
VORRICHTUNG ZUR ABDICHTUNG EINES IN DIE KAROSSERIE EINES FAHRZEUGS EINGELASSENEN ÖFFNUNGSFELDS, UND ENTSPRECHENDES FAHRZEUG
DEVICE FOR SEALING AN OPENING MADE IN THE BODY OF A VEHICLE, AND CORRESPONDING VEHICLE

(30) Priorité: 11.09.2020 EP 20195748
(43) Date de publication de la demande: 19.07.2023
(73) Titulaire: Advanced Comfort Systems France SAS - ACS France, 79302 Bressuire (FR)
(72) Inventeur: JEAN, Anthony, 44115 Haute-Goulaine (FR); TURC, Thierry, 79300 Bressuire (FR); NEE, Maxime, 79300 Bressuire (FR)
(74) Mandataire: Vidon Brevets & Stratégie
(86) Numéro de dépôt international: PCT/EP2021/074941
(87) Numéro de publication internationale: WO 2022/053619

(56) Documents cités:
- EP-A1- 2 072 720
- WO-A2-2010/146185
- GB-A- 1 128 398
- US-A1- 2005 044 799

## Description

### 1. Domaine de l'invention

Le domaine de l'invention est celui de l'équipement des baies, utilisées notamment dans les véhicules automobiles.

Plus précisément, l'invention concerne les dispositifs d'obturation d'une baie ménagée dans un élément de structure, par exemple dans la carrosserie d'un véhicule, ou dans une portière du véhicule, et comprenant une partie mobile coulissante susceptible de libérer ou de fermer une ouverture en offrant un aspect affleurant, vu de l'extérieur.

L'invention peut notamment équiper différents types de structures, tels que les caravanes, les camping-cars, les cars et bus, les minibus, les camions, les camionnettes, les bateaux, etc.

De tels dispositifs, développés depuis plusieurs années par le titulaire de la présente demande, sont notamment connus sous le terme "baie flush".

En d'autres termes, ces dispositifs sont conçus de façon à présenter, vu de l'extérieur, un aspect affleurant ou quasi-affleurant entre la carrosserie, ou plus généralement la paroi ou la structure, et le panneau fixe du dispositif.

### 2. Art antérieur

Le principe général de cette technique est notamment décrit dans les documents de brevet US 2005/044799 A1, EP-0 778 168 et EP-0 857 844.

Le dispositif d'obturation (appelé par la suite "baie flush") comprend une partie fixe et une partie mobile par rapport à cette partie fixe, ou panneau coulissant.

La partie mobile est reliée à l'ensemble fixe par des éléments fonctionnels qui assurent la mobilité requise et qui sont rapportés sur la face de la partie fixe tournée vers l'intérieur du véhicule.

Ces éléments fonctionnels, ou rails, assurent une fonction de guidage et de maintien du panneau mobile. Ils sont placés sur la face orientée vers l'intérieur du véhicule, de façon suffisamment éloignée des bords, ou de la périphérie, de la partie fixe pour que cette périphérie puisse être solidarisée directement aux bords de la baie, sans que les rails n'interfèrent. On peut ainsi s'affranchir de la présence d'un cadre de liaison entre les bords de la baie et la partie fixe.

Cette partie fixe peut être réalisée en un ou plusieurs éléments (placés les uns à côté des autres dans un même plan), par exemple en verre ou en polycarbonate.

Une telle baie flush peut ainsi être montée intégralement indépendamment du véhicule, et rapportée, depuis l'extérieur, dans le logement défini à cet effet par la baie, ou le logement, définie dans la carrosserie, ou plus généralement dans la paroi.

Les bords de la partie fixe sont solidarisés, par exemple à l'aide d'un cordon de colle, aux bords de la baie, sans autre élément intermédiaire de liaison.

Sur le plan esthétique, la baie flush présente, vue de l'extérieur, un aspect lisse, affleurant, du fait qu'aucun cadre n'est nécessaire sur le contour de l'ouverture formée dans l'ensemble fixe.

Pour assurer le déplacement de la partie mobile, constituée généralement par un panneau transparent, on prévoit donc un dispositif de guidage comportant un premier et un second rails de guidage montés fixes sur la partie fixe (ou structure fixe) de la baie, de part et d'autre de l'ouverture fermée par le panneau mobile.

Le panneau mobile est monté, par le biais de navettes, sur les rails, pour coulisser par exemple selon une direction longitudinale, dans un plan de coulissement entre une (ou plusieurs) position d'ouverture et une position de fermeture, dans laquelle il obture l'ouverture.

Pour maximiser l'aspect affleurant, il a été proposé que, dans la position de fermeture, le panneau mobile s'inscrive dans le plan de la partie fixe, en passant d'une position intermédiaire de dégagement, dans le plan de coulissement, en regard de l'ouverture et dégagé de celle-ci à la position de fermeture.

On notera que le terme « plan » doit ici s'entendre dans une acception élargie : le plan formé par la baie est parfois courbe, selon une, voire deux, directions pour s'adapter à la forme de la structure (ceci justifie également le terme « sensiblement » utilisé dans la description et les revendications).

Le panneau mobile peut être déplacé manuellement ou bien à l'aide d'un moteur électrique. Dans ce dernier cas, des moyens d'actionnement agissent sur une des navettes présentes dans les rails afin de déplacer le panneau mobile entre une position fermée et au moins une position ouverte. Les moyens d'actionnement peuvent notamment se présenter sous la forme d'un câble (dit câble Push-Pull) relié au moteur électrique de sorte à tirer ou pousser le panneau mobile. Les moyens d'actionnement peuvent également se présenter sous la forme d'une crémaillère ou de câbles du type câble de vélo.

Dans le cas d'un entrainement motorisé du panneau mobile, la demanderesse a cependant observé que le déplacement de la navette dans le rail pouvait être excessif et/ou irrégulier, notamment lorsque l'entrainement motorisé est défectueux, ce qui peut être particulièrement préjudiciable au fonctionnement et/ou à l'intégrité du dispositif d'obturation.

Il existe donc un besoin de fournir une nouvelle technique de guidage et/ou d'arrêt d'un panneau mobile d'une baie d'obturation d'une structure, telle qu'un véhicule automobile ou similaire, permettant le passage d'une position d'obturation, affleurante avec le panneau fixe, à une position de coulissement, qui soit simple, efficace et fiable.

Il existe également un besoin de fournir une technique qui pallie ou réduit certains effets néfastes et indésirables apparaissant dans les rails de guidage d'un tel dispositif d'obturation (humidité et nuisance sonore par exemple).

Il existe également un besoin de fournir, à moindres coûts, une technique simple de fabrication, d'assemblage et/ou d'entretien.

### 3. Résumé de l'invention

La technique de l'invention permet de résoudre au moins certains des inconvénients soulevés par l'art antérieur. Plus précisément, la technique proposée se rapporte à un dispositif d'obturation d'une baie ménagée dans une structure, comprenant une partie fixe, dans laquelle est définie une ouverture, et au moins un panneau mobile coulissant guidé le long de deux rails de guidage montés sur une face dudit panneau fixe, entre une position de fermeture, obturant ladite ouverture, dans un premier plan défini par ledit panneau fixe, dit plan d'obturation, et au moins une position d'ouverture, dans un second plan, dit plan de coulissement, sensiblement parallèle audit plan d'obturation, chacun desdits rails de guidage portant au moins une navette guidée en translation dans ledit rail, mobile en translation dans lesdits rails de guidage, et assurant le passage du panneau mobile de ladite position d'obturation à ladite au moins une position de coulissement, et réciproquement, et le déplacement en coulissement dudit panneau mobile dans ledit plan d'obturation.

Selon la technique proposée, au moins un desdits rails porte, à l'une de ses extrémités, un embout formant butée mécanique définissant une position d'arrêt pour ladite navette.

Ainsi, on s'affranchit, de manière simple et efficace, de tout déplacement excessif de la navette dans le rail de guidage au niveau de l'extrémité du rail présentant l'embout formant butée. De tels déplacements excessifs surviennent notamment lorsque l'entrainement motorisé de la navette en question dérive, pour des raisons de vétusté par exemple, par rapport à un signal de commande. Cela permet notamment d'éviter un éventuel blocage du dispositif d'obturation en position fermée ou entièrement ouverte du panneau mobile. On améliore ainsi la fiabilité du dispositif d'obturation.

Un tel embout formant butée permet en outre de contribuer à l'initialisation de l'entrainement motorisé de la navette. Plus précisément, l'initialisation consiste à actionner l'entrainement motorisé jusqu'à ce que la navette entre en contact avec l'embout, définir cette position comme position d'arrêt de la navette et l'enregistrer dans une unité de commande de cet entrainement motorisé. Puis, cette unité de commande détermine/calcule une position de fin de course de la navette, située légèrement en amont de la position d'arrêt, utilisé comme signal de commande de l'entrainement motorisé. Une telle séquence d'initialisation est réalisée de manière régulière, par exemple tous les deux cents cycles d'ouverture/fermeture du panneau mobile, pour détecter une éventuelle dérive de l'entrainement motorisé et de corriger le signal de commande de celui-ci en conséquence afin d'éviter que la navette percute l'embout formant butée mécanique. Ainsi, l'embout formant butée améliore davantage la fiabilité du dispositif d'obturation

Par ailleurs, le fait de former la butée mécanique avec un embout distinct du rail de guidage permet de rapporter aisément cet embout sur des rails de dispositifs d'obturation existants.

Selon un mode de réalisation particulier de la présente technique, ledit rail est un profilé et ledit embout est une pièce plastique comprenant au moins une portion apte à s'emboîter dans au moins portion complémentaire dudit profilé.

Un tel emboîtement permet notamment d'améliorer le maintien de l'embout formant butée mécanique dans le rail de guidage, voire d'assurer à lui seul l'assemblage de deux éléments en question. Ainsi, il est possible de rapporter l'embout formant butée mécanique sur des rails sans nécessiter, ou de manière minime, d'adaptation de la structure de dispositifs d'obturation existants.

Selon un autre un mode de réalisation particulier de la présente technique, ledit embout est solidarisé audit rail par vissage.

Un tel vissage permet d'assurer, à moindres coûts et de manière efficace, une fixation réversible de l'embout formant butée mécanique dans le rail de guidage. Ainsi, le remplacement d'un embout détérioré par un neuf est relativement aisé.

Selon l'invention, ledit embout porte une piste de guidage d'un pion solidaire dudit panneau mobile.

Une telle piste permet de guider progressivement un pion porté par le panneau mobile depuis une piste de coulissement, orientée sensiblement selon l'axe longitudinal du véhicule, vers une encoche de réception de ce même pion en position finale du panneau mobile (fermée par exemple). Ainsi, l'embout formant butée mécanique permet en outre de contribuer au guidage du panneau mobile afin notamment d'éviter la présence d'à-coups lorsque celui-ci parvient en position finale.

Selon l'invention, ledit embout porte un élément de gestion et d'évacuation vers l'extérieur de l'eau présente dans ledit rail.

La présence d'eau dans les rails peut notamment être due à de l'eau initialement présente sur la face du dispositif d'obturation orientée vers l'intérieur du véhicule, du fait de la condensation ou d'un lavage de l'intérieur du véhicule par exemple, qui coule le long des bords du dispositif d'obturation jusqu'à parvenir dans le rail inférieur.

Un tel élément de gestion et d'évacuation permet notamment de collecter l'eau présente dans le rail et de l'évacuer vers l'extérieur du véhicule. On évite ainsi la présence d'eau stagnante dans le rail et les désagréments qui en découleraient, et ce aussi bien pour les occupants du véhicule (odeur notamment) que pour le dispositif d'obturation (fonctionnement et usure prématurée notamment).

De préférence, ledit élément de gestion et d'évacuation comprend une cuve de recueil de l'eau et une portion plane présentant au moins une chicane, s'étendant sous ladite cuve.

Un tel agencement de moyens d'évacuation d'eau, formés par la portion plane et l'au moins une chicane, permet d'évacuer efficacement l'eau présente dans la cuve vers l'extérieur du véhicule tout en minimisant le risque que l'eau extérieure pénètre dans l'élément de gestion et d'évacuation, et donc dans le dispositif d'obturation. Par exemple, lorsque l'extérieur du véhicule est nettoyé avec un jet d'eau haute pression, l'eau ne pénètre pas dans les moyens d'évacuation, à tout le moins pas en quantité suffisamment pour parvenir jusque dans la cuve, en dépit de la pression du jet. Ainsi, on améliore notamment la fiabilité du dispositif d'obturation.

En particulier, ledit élément de gestion et d'évacuation peut comprendre, au-dessus du niveau dudit rail, une portion de récupération et de guidage de l'eau vers ladite cuve, notamment lorsque ladite structure est inclinée.

Une telle portion de récupération et de guidage permet notamment de récupérer et de rediriger vers la cuve l'eau qui ressortirait de celle-ci. Une telle situation peut notamment être observée lorsque le véhicule est dans une position fortement inclinée, dans la direction X (longueur du véhicule) et/ou Y (largeur). Cela peut par exemple se produire lorsque le véhicule circule sur une voie escarpée ou est garé sur un plan incliné.

De préférence encore, ladite portion plane assure une liaison entre ledit rail et ladite structure.

De cette manière, l'élément de gestion et d'évacuation assure, à tout le moins contribue, au maintien en position du dispositif d'obturation sur la structure en cas de bris de la partie fixe du dispositif. Ainsi, on améliore notamment la sécurité des occupants du véhicule notamment en cas d'accident.

De préférence encore, ledit élément de gestion et d'évacuation comprend un surmoulage et/ou un joint assurant l'étanchéité dudit rail.

La technique proposée concerne également un véhicule automobile comprenant au moins un dispositif d'obturation tel que décrit précédemment.

### 4. Liste des Figures

La technique proposée, ainsi que les différents avantages qu'elle présente, seront plus facilement compris, à la lumière de la description qui va suivre de deux modes de réalisation illustratifs et non limitatifs de celle-ci, et des dessins annexés parmi lesquels :
- la figure 1 illustre un exemple d'un dispositif d'obturation selon la technique proposée ;
- la figure 2 illustre une vue partielle du dispositif d'obturation de la figure 1 focalisée sur la partie avant du rail de guidage inférieur comprenant certains organes contribuant au coulissement du panneau mobile ;
- la figure 3 illustre une vue partielle d'un exemple de rail inférieur de dispositif d'obturation configuré pour recevoir un embout formant butée mécanique selon un premier mode de réalisation de la technique proposée ;
- la figure 4 illustre une vue en perspective surélevée un exemple d'embout formant butée mécanique selon un premier mode de réalisation de la technique proposée ;
- les figures 5A et 5B illustrent des vues éclatée et assemblée respectivement d'un exemple partiel de rail inférieur de dispositif d'obturation équipé d'un embout formant butée mécanique, selon deuxième mode de réalisation de la technique proposée, sur lequel est rapporté un élément de gestion et d'évacuation vers l'extérieur de l'eau présente dans le rail ;
- la figure 6 illustre une vue en perspective surélevée de l'embout formant butée mécanique des figures 5A et 5B ;
- les figures 7A et 7B sont deux vues de l'ensemble de la figure 5B dépourvu de l'élément de gestion et d'évacuation vers l'extérieur de l'eau présente dans le rail ; et
- les figures 8 et 9 illustrent différentes vues de l'élément de gestion et d'évacuation vers l'extérieur de l'eau présente dans le rail des figures 5A et 5B.

### 5. Description détaillée de l'invention

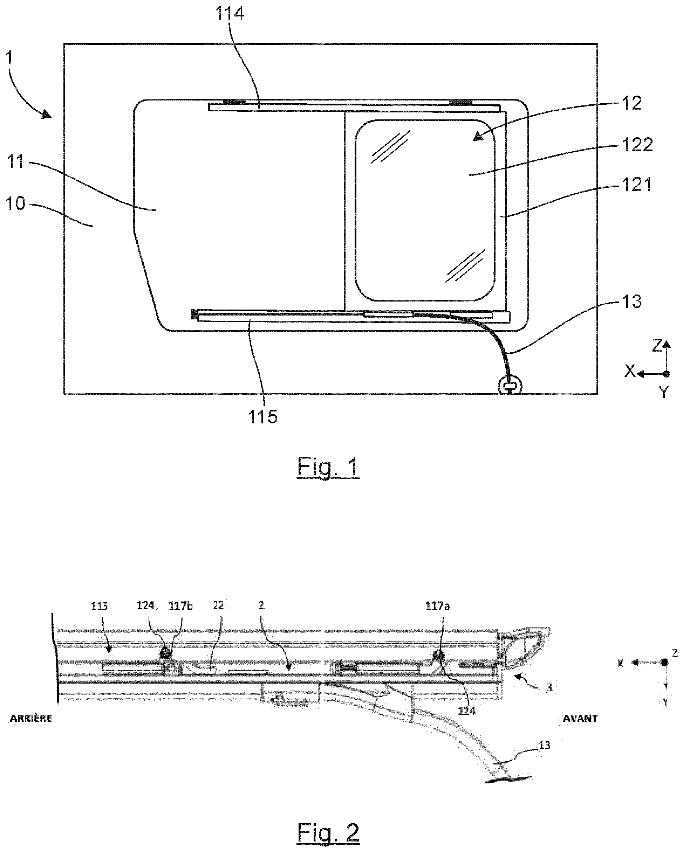

On illustre par la suite différents modes de réalisation de la technique proposée, traités à titre de simples exemples illustratifs, et non limitatifs, à l'appui des figures 1 à 9 faisant directement ou indirectement référence à une paroi latérale d'un véhicule automobile.

La technique proposée peut s'appliquer de la même façon à d'autres structures présentant une paroi dans laquelle est définie une baie, comme, par exemple, une caravane ou un camping-car. Notamment, la baie peut être formée dans une paroi latérale du véhicule (par exemple pour les véhicules utilitaires, les monospaces, les breaks...), dans une paroi orientée vers l'arrière du véhicule (par exemple pour les « pickup »), ou encore dans une portière. Il peut également s'agir d'une baie de séparation d'un véhicule.

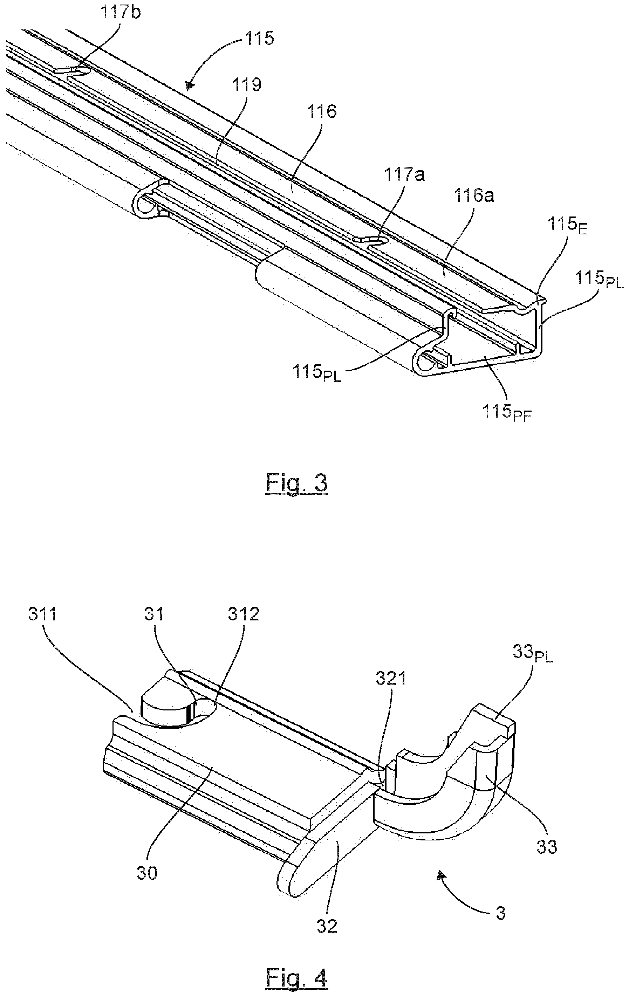

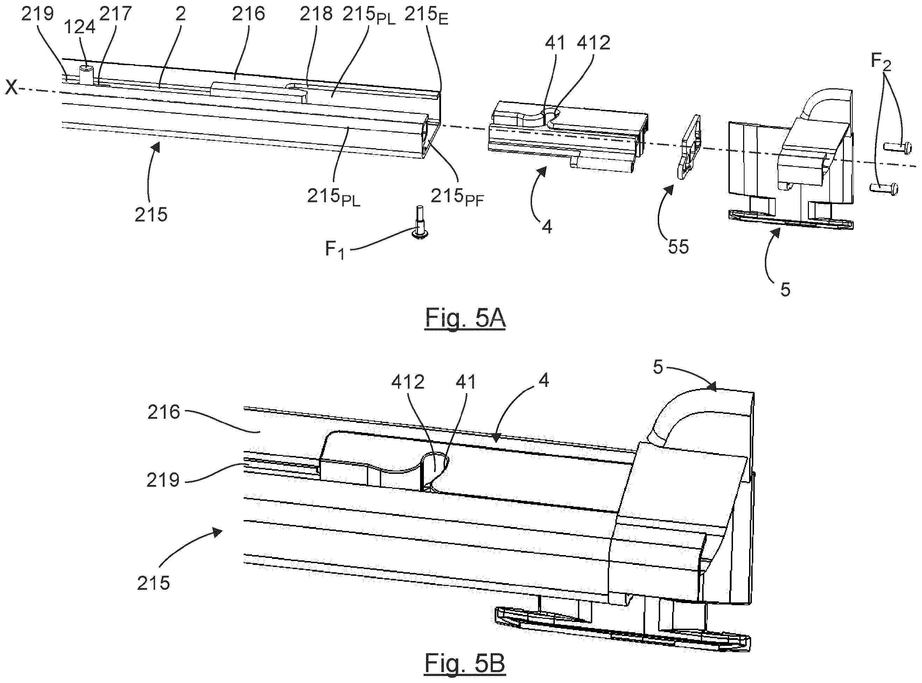

On présente tout d'abord en relation avec les figures 1 et 2 le fonctionnement général d'un exemple de dispositif d'obturation selon la technique proposée. On présente ensuite en relation avec les figures 3 et 4 un premier mode de réalisation de la technique proposée (également visible sur la figure 2) et en relation avec les figures 5A à 9 un deuxième mode de réalisation de la technique proposée.

Par la suite, de mêmes éléments ont été désignés par de mêmes références sur les différentes figures.

### 5.1. Fonctionnement général du dispositif d'obturation

La **figure 1** illustre un dispositif d'obturation à panneau mobile en coulissement vue de l'intérieur du véhicule. La **figure 2** illustre, selon une vue de dessus partielle, certains organes contribuant au coulissement du panneau mobile lorsque celui-ci est en position fermée.

Un tel dispositif d'obturation 1 se présente sous la forme d'un ensemble, ou "baie flush", prêt à être placé dans une baie (c'est-à-dire une ouverture, ou un "trou") ménagée dans la carrosserie 10 (paroi latérale par exemple) ou une porte, ou plus généralement dans la structure d'un véhicule (ou d'une caravane ou d'un camping-car, par exemple), ou plus généralement d'une paroi devant recevoir un dispositif d'obturation muni d'un ouvrant.

Un tel dispositif d'obturation comprend une partie fixe 11, c'est-à-dire restant immobile par rapport à la structure 10 qui la reçoit, et un panneau mobile en coulissement, ou panneau coulissant, 12, mobile par rapport à la partie fixe 11.

La partie fixe 11, encore appelée panneau fixe, peut notamment être réalisée en verre ou en polycarbonate, en un ou plusieurs éléments.

La partie fixe 11 est percée d'une ouverture obturée par le panneau mobile 12 dans la position de la figure 1 et s'étendant dans un même plan que la partie fixe 11.

Ce panneau mobile 12 comporte notamment une portion vitrée 122 et un cadre 121.

Des rails de guidage, respectivement un rail supérieur 114 et un rail inférieur 115, réalisés en un matériau profilé, sont rapportés par collage sur la face de la partie fixe 11 orientée vers l'intérieur du véhicule. On note que ces rails sont éloignés du contour de la partie fixe 11, et ne participent pas, ni ne nuisent, à la solidarisation de celle-ci au bord de la baie.

Les rails 114 et 115, qui sont sensiblement parallèles dans cet exemple, maintiennent et guident en coulissement le panneau mobile 12, qui présente un cadre 121 solidaire des rails 114, 115.

Le panneau mobile 12 peut être déplacé le long des rails 114, 115, dans un plan de coulissement sensiblement parallèle au plan défini par la partie fixe 11.

Le panneau mobile 12 peut venir obturer complètement l'ouverture de la partie fixe 11 (figure 1) ou libérer partiellement ou totalement cette ouverture. Ainsi, le panneau mobile 12 peut prendre une ou plusieurs positions d'ouverture, selon sa position par rapport aux rails 114, 115.

Par ailleurs, le panneau mobile 12 peut se déplacer perpendiculairement au plan défini par la partie fixe 11, de façon à venir obturer l'ouverture, dans une position fermée (figure 1), dans laquelle elle affleure avec cette partie fixe 11, de façon à proposer un ensemble affleurant (carrosserie 10, partie fixe 11 et partie mobile 12).

La face de la partie fixe 11 tournée vers l'intérieur du véhicule porte par ailleurs un joint d'étanchéité (non représenté) collé sur le contour de l'ouverture, dont l'extrémité de la lèvre vient prendre appui sur le panneau mobile 12, lorsque celui-ci est en position d'obturation.

Le rail supérieur 114 porte une navette supérieure (non visible) et le rail inférieur 115 porte une navette inférieure 2 (figure 2).

Plus précisément, les rails supérieur 114 et inférieur 115 sont des rails comprenant une paroi de fond et deux parois latérales s'étendant perpendiculairement à la paroi de fond. L'autre extrémité des parois latérales présente un court retour permettant de recevoir et maintenir les navettes supérieure et inférieure. La structure des rails de guidage sera détaillée ultérieurement lors de la description des différents modes de réalisation de l'invention.

Les navettes supérieure et inférieure se présentent chacune sensiblement sous la forme d'un barreau de dimensions adaptées pour coulisser dans les rails de guidage et présentent des pistes avant et arrière aptes à coopérer avec des pions 124 portés par le panneau mobile 12.

Ces pistes permettent, lors du déplacement des navettes, d'entrainer le panneau mobile 12, rapport à la partie fixe 11, selon un mouvement pouvant être décomposer en deux déplacements indépendants, à savoir :
- un déplacement perpendiculaire (selon l'axe Y) vers l'intérieur du véhicule en deux temps (dit louvoiement) par rapport au plan formé par la partie fixe 11, permettant le passage d'une position fermée et verrouillée, dans laquelle le panneau mobile 12 se trouve dans le même plan que la partie fixe 11 et l'ouverture, à une position intermédiaire de dégagement, dans laquelle le panneau mobile 12 est décalé par rapport à la partie fixe 11 en regard de l'ouverture et dégagé de celle-ci, dans un plan de coulissement, de façon à permettre ce coulissement. Le panneau mobile 12 est ainsi mobile selon une direction de dégagement perpendiculaire à la direction de coulissement, et
- un déplacement dans le plan de coulissement (selon l'axe X), parallèle au plan formé par la partie fixe 11.

Bien sûr, d'autres mouvements sont possibles. Par exemple, le panneau mobile peut suivre une courbe selon laquelle les deux mouvements (verrouillage/déverrouillage et coulissement) sont liés.

Le mouvement du panneau mobile 12 est notamment assuré par le biais d'un câble de commande, ou câble d'entrainement, 13 de type "push pull", couplé à la navette inférieure 2 et entrainé par des moyens motorisés commandés par un utilisateur.

Selon la technique proposée, au moins un des rails de guidage porte, à l'une de ses extrémités, un embout formant butée mécanique définissant une position d'arrêt pour la navette.

Un tel embout permet notamment de contribuer à l'initialisation de l'entrainement motorisé de la navette et, en cas de disfonctionnement de cet entrainement motorisé, interrompre le déplacement de la navette en question en venant en butée contre celui-ci. Cela permet donc notamment d'éviter une extraction partielle de la navette du rail de guidage dans laquelle elle se déplace.

De manière optionnelle, l'embout formant butée mécanique peut présenter ou recevoir un élément de gestion et d'évacuation vers l'extérieur de l'eau, et plus généralement de tout liquide, présent dans le rail.

Un tel élément de gestion et d'évacuation, dont différents exemples seront décrits ci-après, permet de collecter l'eau présente dans le rail et de l'évacuer vers l'extérieur du véhicule.

### 5.2 Premier mode de réalisation

On présente en relation avec les figures 3 et 4 un exemple dispositif d'obturation selon un premier mode de réalisation de la technique proposée. Seront décrits ci-après uniquement les éléments du dispositif d'obturation gravitant autour de la technique proposée pour simplifier la compréhension de celle-ci.

La **figure 3** illustre selon une vue en perspective surélevée une portion avant d'un exemple de rail inférieur de dispositif d'obturation configuré pour recevoir un embout formant butée mécanique selon un premier mode de réalisation de la technique proposée.

Le rail inférieur 115, correspondant à celui de la figure 2, est un profilé comprenant une paroi de fond 115_{PF} et deux parois latérales 115_{PL} s'étendant perpendiculairement à la paroi de fond. La paroi latérale 115_{PL} située du côté extérieur du véhicule comprend un retour 116 qui s'étend perpendiculairement à cette dernière et vers l'intérieur du véhicule.

Le retour 116, formant paroi supérieure du rail inférieur 115, définit une piste 119 de déplacement des pions du panneau mobile, selon l'axe X, lors du mouvement de celui-ci depuis une position fermée vers la ou les positions d'ouverture, et inversement.

Le retour 116 présente deux encoches, à savoir une encoche avant 117a et une encoche arrière 117b, configurées pour recevoir chacune un des pions 124 portés par le panneau mobile lorsque ce dernier est en position fermée, tel qu'illustré en figure 2.

Les formes et dimensions des encoches avant et arrière 117a, 117b sont donc complémentaires à celles des pions du panneau mobile.

En d'autres termes, le rail inférieur comprend une paroi de fond et deux parois latérales s'étendant perpendiculairement à la paroi de fond. La paroi latérale située du côté du véhicule comprend un retour qui s'étend perpendiculaire à cette dernière et vers l'intérieur du véhicule. Le retour présente deux encoches, à savoir une encoche avant et une encoche arrière, aptes à recevoir chacune un pion porté par le panneau mobile lorsque ce dernier est en position fermée.

Dans l'exemple illustré, les encoches avant et arrière 117a, 117b, sensiblement en forme de « U », s'étendent perpendiculairement à la piste 119, c'est-à-dire vers l'extérieur du véhicule selon l'axe Y.

L'encoche avant 117a est en outre située à distance de l'extrémité avant 115_{E} du rail inférieur 115, c'est-à-dire l'extrémité du rail inférieur 115 situé vers l'avant du véhicule. En d'autres termes, une portion 116a du retour 116 est présente entre l'encoche avant 117a et l'extrémité 115_{E} du rail inférieur 115.

La **figure 4** illustre, selon une vue en perspective surélevée, un embout formant butée mécanique selon un premier mode de réalisation de la technique proposée.

L'embout 3 comprend un corps, ou portion, 30 présentant une forme complémentaire à l'extrémité avant 115_{E} du rail inférieur 115 et est configurée pour s'insérer dans celle-ci.

Le corps 30 de l'embout 3 est dimensionné de manière à coopérer avec une extrémité avant de la navette inférieur lors que le panneau mobile est en position fermée.

Un ou des moyens de fixation (non représentés) sont prévus pour solidariser l'embout 3 au rail inférieur 115 afin de former une butée mécanique la de navette inférieure.

Par ailleurs, le corps 30 comprend, à une première extrémité, destinée à être orientée vers l'arrière du véhicule, une rainure, ou encoche, 31 définissant une piste de guidage d'un pion solidaire du panneau mobile.

La rainure 31 présente une extrémité débouchante 311 et une extrémité de fond 312 respectivement destinée à être positionnée en regard de la piste 119 et de l'encoche avant 117a du rail inférieur 115 lorsque l'embout 3 est inséré dans le rail inférieur 115.

Ainsi, lorsque le panneau mobile est en position fermée, le pion avant de celui-ci est disposé simultanément dans l'encoche avant 117a du rail inférieur 115 et au fond de la rainure 31 de l'embout 3.

En d'autres termes, la butée avant comprend un corps présentant une forme complémentaire au rail inférieur de sorte à pouvoir être insérée dans l'extrémité avant du rail inférieur, c'est-à-dire l'extrémité du rail situé vers l'avant du véhicule. Le corps de la butée avant comprend une rainure, ou encoche, présentant une forme courbe, sensiblement en virgule, dont l'extrémité ou fond est positionné(e) en regard de l'encoche avant du rail inférieur lorsque la butée avant est insérée dans le rail inférieur.

Par ailleurs, l'embout 3 comprend une plaque 32 configurée pour fermer, de manière étanche, l'extrémité avant 115_{E} du rail inférieur 115 après insertion de l'embout 3.

L'embout 3 comprend en outre un élément de gestion et d'évacuation vers l'extérieur de l'eau présente dans le rail inférieur.

Pour ce faire, une ouverture 320, permettant une communication fluidique entre l'espace intérieur du rail inférieur 115 et l'élément de gestion et d'évacuation, est prévue dans la plaque 32 de fermeture.

L'élément de gestion et d'évacuation comprend une cuve (non représentée) de recueil de l'eau, des moyens d'évacuation (non représentés) de l'eau présente dans la cuve et, au-dessus du niveau du rail inférieur 115 lorsque l'embout 3 y est solidarisé, une portion de récupération et de guidage 33 de l'eau vers la cuve.

Une telle portion de récupération et de guidage permet notamment de récupérer et de guider / rediriger vers la cuve l'eau qui ressortirait de celle-ci, lorsque le véhicule est incliné par exemple.

Dans l'exemple illustré, l'embout 3 est réalisé de manière monobloc en un matériau plastique.

Par ailleurs, la rainure 31 présente une forme courbe, sensiblement en virgule, afin de guider progressivement le pion avant du panneau mobile depuis la piste 119 vers l'encoche avant 117a. Cela permet notamment d'éviter les à-coups lorsque le panneau mobile arrive en position fermée.

La portion de récupération et de guidage est une gouttière, ou goulotte, 33 présentant une section transversale sensiblement en « U » et présentant une forme courbe, sensiblement en virgule.

La goulotte 33 présente une première extrémité, dite inférieure, en communication fluidique avec l'ouverture 320 de la plaque 32 et une deuxième extrémité, dite supérieure, faisant sensiblement saillie selon l'axe Z de sorte à être disposée au-dessus du niveau du corps 30 de l'embout 3.

La goulotte 33 est agencée et dimensionnée de manière à ce qu'elle présente une paroi latérale 33_{PL} en regard de la paroi latérale 115_{PL}, du rail inférieur 115, située du côté extérieur du véhicule lorsque l'embout est inséré dans le rail inférieur 115.

### 5.3 Deuxième mode de réalisation

On présente en relation avec les figures 5A à 9 un exemple de dispositif d'obturation conforme à un deuxième mode de réalisation de la technique proposée. À nouveau, seront décrits ci-après uniquement les éléments du dispositif d'obturation gravitant autour de la technique proposée pour simplifier la compréhension de celle-ci.

Ce deuxième mode de réalisation se distingue du premier essentiellement par la structure de l'embout formant butée mécanique, et donc par la structure du rail de guidage le recevant, ainsi que par la structure de l'élément de gestion et d'évacuation vers l'extérieur de l'eau présente dans le rail.

Les **figures 5A** et **5B** illustrent, selon des vues éclatée et assemblée respectivement, une portion avant d'un rail inférieur de dispositif d'obturation équipé d'un embout formant butée mécanique sur lequel est rapporté un élément de gestion et d'évacuation vers l'extérieur de l'eau présente dans le rail.

Dans ce deuxième mode de réalisation, le rail inférieur 215, davantage visible en figure 5A, est un profilé comprenant une paroi de fond 215_{PF} et deux parois latérales 215_{PL} s'étendant perpendiculairement à la paroi de fond 215_{PF}. La paroi latérale 215_{PL} située du côté extérieur du véhicule comprend un retour 216 qui s'étend perpendiculairement à cette dernière et vers l'intérieur du véhicule de sorte à définir une piste 219 de déplacement, selon l'axe X, des pions 124 portés par le panneau mobile.

Le rail inférieur 215 se distingue du rail inférieur du premier mode de réalisation essentiellement par le fait que le retour 216 présente un évidement avant 218. L'évidemment 218 s'étend, selon l'axe X, depuis l'extrémité avant 215_{E} du rail sur une longueur prédéterminée et débouche sur la piste 219. En d'autres termes, l'évidement avant 218 permet d'élargir l'extrémité avant de la piste 219.

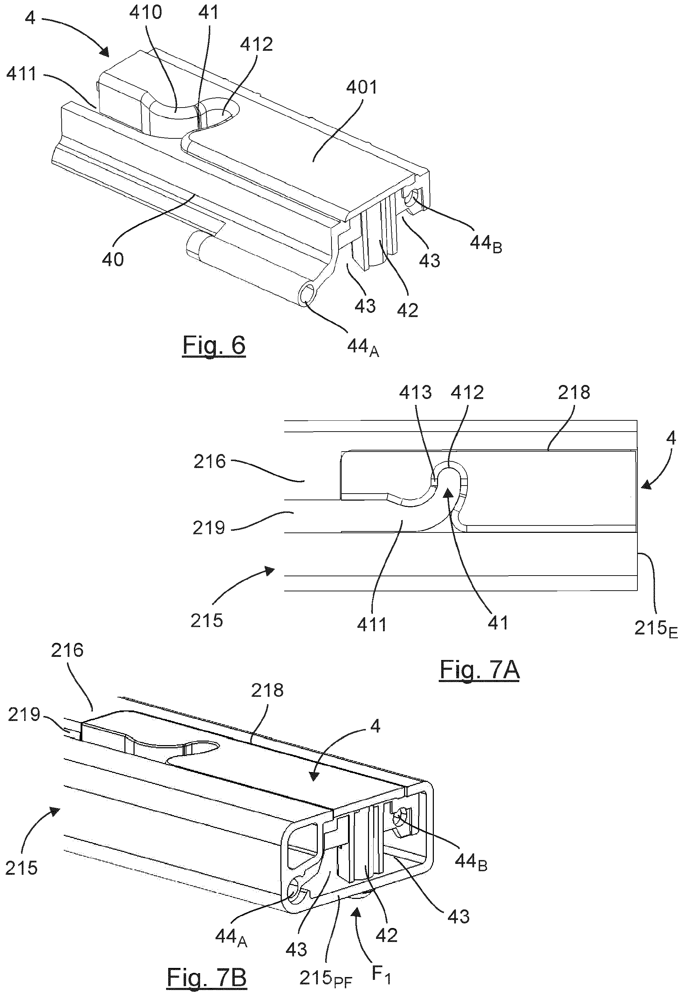

Tel qu'illustré en figure 5B, et détaillé par la suite en relation avec les figures 6 à 7B, l'évidement avant 218 est configuré pour recevoir/loger une portion d'un embout 4 sur laquelle est ménagée une rainure 41 présentant une extrémité définissant une encoche avant 412 de réception d'un pion avant (non représenté) porté par le panneau mobile lorsque ce dernier est en position fermée. En d'autres termes, l'encoche avant ménagée sur le retour du rail dans le premier mode de réalisation est ici ménagée sur l'embout formant butée mécanique.

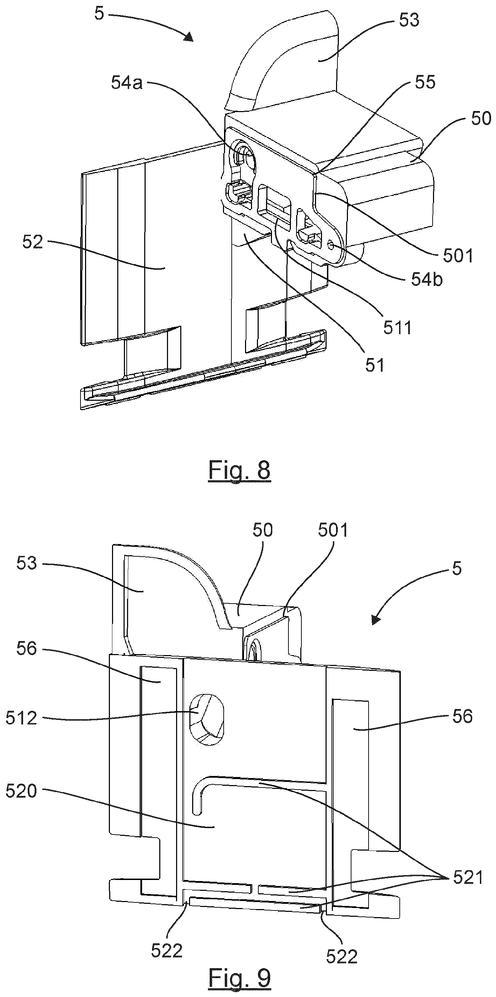

Par ailleurs, dans ce deuxième mode de réalisation, le dispositif d'obturation comprend un élément de gestion et d'évacuation 5 vers l'extérieur de l'eau présente dans le rail distinct de l'embout 4. L'élément de gestion et d'évacuation 5, détaillé par la suite en relation avec les figures 8 et 9, est fixé sur l'embout 4 par l'intermédiaire de moyens de fixation F₂.

### 5.3.1 Embout formant butée mécanique

On présente en relation avec les figures 6, 7A et 7B l'embout formant butée mécanique des figures 5A et 5B.

Plus précisément, la **figure 6** illustre, selon une vue en perspective surélevée, de manière isolée, l'embout formant butée mécanique des figures 5A et 5B. Les **figures 7A** et **7B** illustrent, selon des vues de dessus et en perspective surélevée respectivement, l'ensemble de la figure 5B dépourvu de l'élément de gestion et d'évacuation vers l'extérieur de l'eau présente dans le rail.

Dans ce deuxième mode de réalisation, l'embout 4 formant butée mécanique définissant une position d'arrêt de la navette se distingue de l'embout du premier mode de réalisation essentiellement par le fait qu'il comprend :
- une rainure 41 présentant une extrémité définissant une encoche avant 412 de réception d'un pion avant (non représenté) porté par le panneau mobile lorsque ce dernier est en position fermée, et
- des moyens de fixation 44a, 44b à un élément de gestion et d'évacuation vers l'extérieur de l'eau présente dans le rail (non représenté).

Pour ce faire, l'embout 4 comprend un corps, ou portion, 40 présentant une forme complémentaire à l'extrémité avant 215_{E} du rail inférieur 215 et est configuré(e) pour s'insérer dans celle-ci. En d'autres termes, le corps 40 de l'embout 4 est adapté pour correspondre/épouser, au moins partiellement, l'intérieur du rail inférieur 215. Cela permet, en minimisant les jeux mécaniques entre l'embout et l'intérieur du rail, d'améliorer le maintien de l'embout dans le rail.

Le corps 40 présente une face extérieure 401 configurée pour être logée dans l'évidement avant 218 du rail inférieur 215. La face extérieure 401 est en outre configurée pour être située dans le plan 216 du rail inférieur 215 afin de ne pas perturber le déplacement du panneau mobile.

Par ailleurs la face extérieure 401 comprend, à une première extrémité, destinée à être orientée vers l'arrière du véhicule, une rainure, ou encoche, 41 définissant une piste de guidage et d'arrêt d'un pion solidaire du panneau mobile.

La rainure 41 présente une extrémité débouchante 411 et une extrémité de fond 412 formant encoche de réception d'un pion avant porté par le panneau mobile lorsque celui-ci est en position fermée. Ainsi, lorsque le panneau mobile est en position fermée, le pion avant de celui-ci est disposé dans l'encoche 412 de l'embout 4.

Une telle rainure 41 permet à l'embout 4 d'assurer, d'une part, le guidage du pion solidaire du panneau mobile lorsque celui-ci approche de position fermée et, d'autre part, de former (à lui seul) l'encoche de réception de ce pion lorsque le panneau mobile est en position fermée. Une telle configuration permet notamment de réduire les nuisances sonores lors de la fermeture du panneau mobile, et ce tout particulièrement lorsque l'embout est en un matériau plastique. Cela se traduit par une amélioration du confort des occupants du véhicule.

En outre, la rainure 41 présente un bord 410 de liaison avec la face extérieure 401 courbé. En d'autres termes, l'arête extérieure de la rainure 41, c'est-à-dire l'arête donnant sur l'extérieur du rail, est arrondie.

Un tel arrondi permet notamment de simplifier l'extraction d'un élément étranger au dispositif d'obturation, typiquement un doigt, d'enfant notamment, présent dans la rainure. Cela se traduit donc par une amélioration de la sécurité des occupants du véhicule.

Le corps 40 de l'embout 4 définit, ou présente, au moins une canalisation 43 traversant de part et d'autre le corps 40 afin de permettre à l'eau présente dans le rail inférieur 215 de s'écouler jusqu'à l'extrémité avant 215_{E} du rail en question.

Les moyens de fixation 44a, 44b de l'embout 4 sont situés à la deuxième extrémité du corps 40 et sont orientés selon l'axe X afin de permettre la fixation de l'élément de gestion et d'évacuation vers l'extérieur de l'eau présente dans le rail.

Dans l'exemple illustré, l'embout 4 est réalisé de manière monobloc en un matériaux plastique.

La rainure 41 présente une forme courbe, sensiblement en virgule, afin de guider progressivement le pion avant du panneau mobile depuis la piste 119 vers l'extrémité de fond 412 formant encoche avant.

L'embout 4 comprend par ailleurs une portion de fixation 42, typiquement une portion filetée, configurée pour coopérer avec un moyen de fixation complémentaire F1, typiquement une vis, afin de solidariser l'embout 4 au rail inférieur 215. Ainsi, lorsque la navette entre contact avec l'embout 4, du fait que celui-ci est solidarisé au rail, l'embout 4 forme une butée mécanique définissant une position d'arrêt de la navette.

Le corps 40 de l'embout 4 comprend un évidement définissant, avec la paroi de fond 215_{PF} du rail inférieur 215, deux canalisations 43 permettant à l'eau présente dans le rail inférieur 215 de s'écouler jusqu'à l'extrémité avant 215_{E} du rail. Un tel agencement permet par exemple de former, à moindres coûts, des canalisations d'écoulement efficaces, notamment pour les rails inférieurs de dispositif d'obturation.

Les moyens de fixation 44a, 44b sont formés par deux portions filetées chacune configurée pour coopérer avec une vis de fixation F2 traversant l'élément de gestion et d'évacuation vers l'extérieur de l'eau présente dans le rail (décrit ci-après).

### 5.3.2 Élément de gestion et d'évacuation

On présente en relation avec les figures 8 et 9 l'élément de gestion et d'évacuation vers l'extérieur de l'eau présente dans le rail visible sur les figures 5A et 5B.

Les **figures 7A** et **7B** illustrent, selon différentes vues, un exemple d'élément de gestion et d'évacuation distinct d'un quelconque embout et destiné à être rapporté sur celui-ci.

L'élément de gestion et d'évacuation 5 est destinée à être rapporté et fixé, par des moyens de fixation F2, sur l'embout 4, tel qu'illustré sur les figures 5A et 5B. L'élément de gestion et d'évacuation 5 est donc situé sensiblement dans le prolongement du rail inférieur 215 et solidaire de celui-ci par le biais de l'embout 4.

L'élément de gestion et d'évacuation 5 comprend une cuve 51 de recueil de l'eau, des moyens d'évacuation 52 de l'eau présente dans la cuve 51 et une portion de récupération et de guidage 53 de l'eau vers la cuve 51. Ainsi, le rail inférieur 215 recueille l'eau s'écoulant le long de la face intérieure du dispositif d'obturation, puis dirige cette eau vers la cuve 51, qui assure la fonction de zone tampon, jusqu'à ce que l'eau présente dans la cuve se retrouve en quantité suffisamment importante pour s'évacuer, sous l'effet de la gravité, par les moyens d'évacuation 52 dédiés.

Pour ce faire, la cuve 51 comprend une ouverture d'entrée 511, configurée pour récupérer l'eau s'écoulant de l'extrémité avant 215_{E} du rail inférieur 215, et une ouverture de sortie 512, configurée pour acheminer l'eau présente dans la cuve vers les moyens d'évacuation 52.

Les moyens d'évacuation 52 sont raccordés à l'ouverture de sortie 512 de la cuve 51 et s'étendent sous le niveau de ladite cuve. Les moyens d'évacuation 52 comprennent une portion plane 520 présentant au moins une chicane 521 forçant l'eau à serpenter avant évacuation. Un tel agencement permet d'évacuer efficacement l'eau présente dans la cuve vers l'extérieur du véhicule tout en minimisant le risque que l'eau extérieure pénètre dans l'élément de gestion et d'évacuation, et donc dans le dispositif d'obturation.

Par ailleurs, la portion plane 520 assure une liaison entre le rail inférieur et le véhicule. Plus précisément, la portion plane 520 est assemblée, par le biais de portions de raccordement 56, sur la face de la structure orientée vers l'intérieur du véhicule. Cela permet notamment d'assurer ou de contribuer au maintien en position du dispositif d'obturation sur la structure en cas de bris de glace.

La portion de récupération et de guidage 53 est située au-dessus du niveau de la cuve 51 et donc, au-dessus du niveau du rail inférieur 215 lorsque l'élément de gestion et d'évacuation 5 est raccordé au rail inférieur 215. Une telle portion de récupération et de guidage permet notamment de récupérer et de guider / rediriger vers la cuve l'eau qui ressortirait de celle-ci, lorsque le véhicule est incliné par exemple.

Par ailleurs, l'élément de gestion et d'évacuation 5 comprend des orifices de fixation 54a, 54b disposés en regard de moyens de fixation 44a, 44b ménagés sur l'embout 4 et adaptés pour permettre le passage de moyens de fixation F2 complémentaires. En d'autres termes, on fixe l'élément de gestion et d'évacuation 5 sur une pièce intermédiaire, à savoir l'embout. Cela permet notamment, dans une démarche écoresponsable, de remplacer uniquement l'élément défectueux ou usé. Cela permet également de simplifier la maintenance du dispositif d'obturation, notamment le nettoyage de l'intérieur de l'élément de gestion et d'évacuation 5 en cas d'obstruction.

L'élément de gestion et d'évacuation 5 comprend en outre un organe souple 55 destiné à être en prise avec l'extrémité avant 215_{E} du rail inférieur 215 afin d'assurer l'étanchéité de la jonction entre le rail inférieur 215 et l'élément de gestion et d'évacuation 5.

Dans l'exemple illustré, l'élément de gestion et d'évacuation 5 comprend un corps 50 présentant une extrémité ouverte 501 de forme et dimensions sensiblement complémentaires à celles de l'extrémité avant 215_{E} du rail inférieur 215 afin de coopérer avec celle-ci.

Le corps 50 présente en outre un espace intérieur creux en communication fluidique, d'une part, avec le rail inférieur 215 et, d'autre part, avec la cuve 51 par le biais de son ouverture d'entrée 511. Un tel espace intérieur creux permet le passage de l'eau présente dans le rail jusque dans la cuve 51 située sous cet espace intérieur.

La portion plane 520 des moyens d'évacuation 52 s'étend verticalement selon l'axe Y afin de permettre, sous l'effet de la gravité, l'évacuation de l'eau présente dans la cuve 51. La portion plane 520 est d'une longueur suffisante pour traverser un cordon de collage de assurant la solidarisation de la partie fixe du dispositif d'obturation sur la structure du véhicule.

Les moyens d'évacuation 52 présentent en outre une pluralité de chicanes, à savoir quatre dans l'exemple illustré, agencée de manière à forcer l'eau issue de la cuve à serpenter le long de la portion plane 520 avant d'être évacuée par des ouvertures 522 d'évacuation vers l'extérieur.

La portion de récupération et de guidage 53 présente une forme complexe afin de limiter l'encombrement de cette portion dans le dispositif d'obturation. Il apparaît donc que cette forme varie selon la structure du dispositif d'obturation dans lequel il s'insère.

Par ailleurs, la portion de récupération et de guidage 53 se situe sensiblement dans le prolongement de la portion plane 520 des moyens d'évacuation 52 et est agencée de manière à coopérer avec la face intérieure de la partie fixe.

Dans l'exemple illustré, les orifices de fixation 54a, 54b l'élément de gestion et d'évacuation 5 sont destinés aux passages de vis de fixation T2 venant coopérer avec des portions filetées complémentaires prévues dans l'embout 4. Cela permet d'assurer simplement, et de manière réversible, la fixation de l'élément de gestion et d'évacuation 5 sur l'embout 4.

Par ailleurs, l'organe souple 55 est, dans l'exemple illustré, un joint d'étanchéité de forme complémentaire à la section transversale de l'extrémité avant 215_{E} du rail inférieur 215 rapporté sur l'élément de gestion et d'évacuation 5. De manière alternative au joint d'étanchéité rapporté, un surmoulage, réalisé en un matériau présentant cette fonction, peut être réalisé directement sur l'élément de gestion et d'évacuation 5 lors de sa fabrication.

### 5.3 Autres aspects et variantes

Les deux modes de réalisation d'embout, formant butée mécanique définissant une position d'arrêt pour une navette, décrits ci-dessus l'ont été fait en coopération avec l'extrémité avant du rail inférieur du dispositif d'obturation.

Toutefois, l'invention ne se limite pas à une telle implémentation mais couvre plus généralement toute mise en œuvre d'embout formant butée mécanique définissant une position d'arrêt pour une navette porté par une extrémité de rail de guidage de dispositif d'obturation.

Par exemple, dans une variante non illustrée, une extrémité de rail de guidage porte un embout formant butée mécanique définissant une position d'arrêt pour une navette dépourvu de piste de guidage d'un pion porté par le panneau mobile. Un tel embout trouve tout particulièrement une utilité lorsqu'aucun guidage selon l'axe Y n'est nécessaire, ce qui peut notamment être le cas à au niveau de l'extrémité arrière d'un rail de guidage d'un dispositif d'obturation. Cela permet notamment de réduire les coûts de fabrication d'un tel embout tout en assurant la fonction de butée mécanique.

Dans les deux modes de réalisation décrits en relation avec les figures, l'embout formant butée mécanique définissant une position d'arrêt coopère avec un élément de gestion et d'évacuation vers l'extérieur de l'eau présente dans le rail de guidage.

Il peut cependant être envisagé qu'une première extrémité d'un rail de guidage porte un embout présentant un élément de gestion et d'évacuation et qu'une deuxième extrémité de ce même rail porte un embout (non couvert par la présente invention) dépourvu d'un élément de gestion et d'évacuation, mais présentant/portant un élément de fermeture étanche du rail. Cela permet notamment de réduire les coûts de fabrication d'un tel embout tout en assurant l'évacuation de l'eau présente dans le rail.

Selon un autre exemple, il peut être envisagé de rapporter un élément de gestion et d'évacuation vers l'extérieur de l'eau présente dans le rail de guidage tel que décrit précédemment, en relation avec les figures 5A à 9 notamment, à une extrémité de rail sans l'intermédiaire d'un embout formant butée mécanique définissant une position d'arrêt pour une navette. À titre d'exemple, l'élément de gestion et d'évacuation peut être rapporté sur un embout (ou faire partie intégrante de celui-ci), inséré dans l'extrémité du rail, n'assurant pas la fonction de butée mécanique définissant une position d'arrêt pour une navette.

Il apparait donc clairement que la technique proposée n'est pas limitée aux modes de réalisation décrits précédemment et fournis uniquement à titre d'exemple. Elle englobe diverses modifications, formes alternatives et autres variantes que pourra envisager l'homme du métier dans le cadre de la présente invention telle que définie par les revendications.

Selon différents aspects, la technique proposée présente donc tout ou partie des avantages suivants, en fonction des modes de réalisation retenus :
- améliorer le guidage et/ou l'arrêt du panneau mobile ;
- contribuer, voire améliorer, la gestion de l'évacuation de l'eau présente dans le rail de guidage,
- permettre une fixation simple et efficace de l'embout sur le rail de guidage ;
- garantir une longévité importante du dispositif d'obturation ;
- garantir la sécurité des occupants du véhicule ;
- garantir une maintenance simplifiée et/ou écoresponsable du dispositif d'obturation ;
- limiter les coûts de fabrication du dispositif d'obturation ;
- limiter l'encombrement du dispositif d'obturation ;
- améliorer le confort des occupants du véhicule ;
- etc.

## Revendications

1. Dispositif d'obturation (1) d'une baie ménagée dans une structure, comprenant une partie fixe (11), dans laquelle est définie une ouverture, et au moins un panneau mobile (12) coulissant guidé le long de deux rails (114, 115) de guidage montés sur une face dudit panneau fixe (11), entre une position de fermeture, obturant ladite ouverture, dans un premier plan défini par ledit panneau fixe (11), dit plan d'obturation, et au moins une position d'ouverture, dans un second plan, dit plan de coulissement, sensiblement parallèle audit plan d'obturation,
chacun desdits rails (114, 115) de guidage portant au moins une navette (2) guidée en translation dans ledit rail (114, 115), mobile en translation dans lesdits rails de guidage (114, 115), et assurant le passage du panneau mobile (12) de ladite position d'obturation à ladite au moins une position de coulissement, et réciproquement, et le déplacement en coulissement dudit panneau mobile (12) dans ledit plan d'obturation,
au moins un desdits rails (114, 115) porte, à l'une de ses extrémités, un embout portant une piste de guidage d'un pion solidaire dudit panneau mobile et formant butée mécanique définissant une position d'arrêt pour ladite navette,
**caractérisé en ce que** ledit embout porte un élément de gestion et d'évacuation vers l'extérieur de l'eau présente dans ledit rail.

2. Dispositif d'obturation (1) selon la revendication 1, **caractérisé en ce que** ledit rail est un profilé et **en ce que** ledit embout est une pièce plastique comprenant au moins une portion apte à s'emboîter dans au moins portion complémentaire dudit profilé.

3. Dispositif d'obturation (1) selon l'une quelconque des revendications 1 et 2, **caractérisé en ce que** ledit embout est solidarisé audit rail par vissage.

4. Dispositif d'obturation (1) selon la revendication 1, **caractérisé en ce que** ledit élément de gestion et d'évacuation comprend une cuve de recueil de l'eau et une portion plane présentant au moins une chicane, s'étendant sous ladite cuve.

5. Dispositif d'obturation (1) selon la revendication 4, **caractérisé en ce que** ledit élément de gestion et d'évacuation comprend, au-dessus du niveau dudit rail, une portion de récupération et de guidage de l'eau vers ladite cuve, notamment lorsque ladite structure est inclinée.

6. Dispositif d'obturation (1) selon l'une quelconque des revendications 4 ou 5, **caractérisé en ce que** ladite portion plane assure une liaison entre ledit rail et ladite structure.

7. Dispositif d'obturation (1) selon l'une quelconque des revendications 1 à 6, **caractérisé en ce que** ledit élément de gestion et d'évacuation comprend un surmoulage et/ou un joint assurant l'étanchéité dudit rail.

8. Véhicule automobile comprenant au moins un dispositif d'obturation (1) selon l'une des revendications 1 à 7.

## Patentansprüche

1. Verschlussvorrichtung (1) für einer in einer Struktur ausgebildeten Fensteröffnung, umfassend einen feststehenden Teil (11), in dem eine Öffnung definiert ist, und mindestens ein bewegliches Schiebefenster (12), das entlang zweier Schienen (114, 115), die auf einer Seite des feststehenden Fensters (11) montiert sind, zwischen einer Schließposition, die die Öffnung verschließt, in einer von dem feststehenden Fenster (11) definierten ersten Ebene, der sogenannten Verschlussebene, und mindestens einer Öffnungsposition in einer zweiten Ebene, der sogenannten Schiebebene, die im Wesentlichen parallel zu der Verschlussebene verläuft, geführt wird,
wobei jede der Führungsschienen (114, 115) mindestens einen in der Schiene (114, 115) translatorisch geführten Transportschlitten (2) trägt, der in den Führungsschienen (114, 115) translatorisch beweglich ist und den Übergang des beweglichen Fensters (12) von der Verschlussposition in die mindestens eine Schiebeposition und umgekehrt und die Schiebebewegung des beweglichen Fensters (12) in der Verschlussebene gewährleistet,
wobei mindestens eine der Schienen (114, 115) an einem ihrer Enden eine Endkappe trägt, die eine Führungsbahn eines Stifts trägt, der fest mit dem beweglichen Fenster verbunden ist und einen mechanischen Anschlag bildet, der eine Stoppposition für den Transportschlitten definiert,
**dadurch gekennzeichnet, dass** das Endstück ein Element zur Verwaltung und Ableitung des in der Schiene vorhandenen Wassers nach außen trägt.

2. Verschlussvorrichtung (1) nach Anspruch 1, **dadurch gekennzeichnet, dass** die Schiene ein Profil ist und dass das Endstück ein Kunststoffteil ist, das mindestens einen Abschnitt umfasst, der in mindestens einen komplementären Abschnitt des Profils passen kann.

3. Verschlussvorrichtung (1) nach einem der Ansprüche 1 und 2, **dadurch gekennzeichnet, dass** das Endstück durch Verschraubung fest mit der Schiene verbunden ist.

4. Verschlussvorrichtung (1) nach Anspruch 1, **dadurch gekennzeichnet, dass** das Verwaltungs- und Ableitungselement eine Wasserauffangwanne und einen flachen Abschnitt mit mindestens einem Leitblech umfasst, der sich unter der Wanne erstreckt.

5. Verschlussvorrichtung (1) nach Anspruch 4, **dadurch gekennzeichnet, dass** das Verwaltungs- und Ableitungselement oberhalb der Ebene der Schiene einen Wasserrückgewinnungs- und -führungsabschnitt zur Wanne umfasst, insbesondere wenn die Struktur geneigt ist.

6. Verschlussvorrichtung (1) nach einem der Ansprüche 4 oder 5, **dadurch gekennzeichnet, dass** der flache Abschnitt eine Verbindung zwischen der Schiene und der Struktur gewährleistet.

7. Verschlussvorrichtung (1) nach einem der Ansprüche 1 bis 6, **dadurch gekennzeichnet, dass** das Verwaltungs- und Ableitungselement eine Umspritzung und/oder eine Dichtung umfasst, die die Abdichtung der Schiene gewährleistet.

8. Kraftfahrzeug, das mindestens eine Verschlussvorrichtung (1) nach einem der Ansprüche 1 bis 7 umfasst.

## Claims

1. Device (1) for closing off a bay formed in a structure, comprising a fixed portion (11), in which an opening is defined, and at least one sliding movable panel (12) guided along two guide rails (114, 115) mounted on a face of said fixed panel (11), between a closure position, closing off said opening, in a first plane defined by said fixed panel (11), referred to as the closure plane, and at least one opening position, in a second plane, referred to as the sliding plane, substantially parallel to said closure plane,
each of said guide rails (114, 115) carrying at least one shuttle (2) guided in translation in said rail (114, 115), movable in translation in said guide rails (114, 115), and ensuring the passage of the movable panel (12) from said closure position into said at least one sliding position, and vice versa, and the sliding movement of said movable panel (12) in said closure plane,
at least one of said rails (114, 115) carries, at one of its ends, an end piece carrying a guide track for a pin integral with said movable panel and forming a mechanical stop defining a stop position for said shuttle,
**characterised in that** said end piece carries an element for managing and discharging the water present in said rail to the outside.

2. Closure device (1) according to claim 1, **characterised in that** said rail is a profiled section and **in that** said end piece is a plastic part comprising at least one portion capable of fitting in at least a complementary portion of said profiled section.

3. Closure device (1) according to either one of claims 1 and 2, **characterised in that** said end piece is secured to said rail by screwing.

4. Closure device (1) according to claim 1, **characterised in that** said management and discharge element comprises a vessel for collecting water and a planar portion having at least one baffle, extending below said vessel.

5. Closure device (1) according to claim 4, **characterised in that** said management and discharge element comprises, above the level of said rail, a portion for recovering and guiding water to said vessel, particularly when said structure is inclined.

6. Closure device (1) according to either one of claims 4 or 5, **characterised in that** said planar portion provides a link between said rail and said structure.

7. Closure device (1) according to any one of claims 1 to 6, **characterised in that** said management and discharge element comprises an overmoulding and/or a seal ensuring sealing of said rail.

8. Motor vehicle comprising at least one closure device (1) according to one of claims 1 to 7.
